# EUROPEAN PATENT SPECIFICATION

(11) **EP 3 730 675 B1**
(45) Date of publication and mention of the grant of the patent: **24.08.2022**
(21) Application number: 18890650.7
(22) Date of filing: 12.12.2018
(51) Int. Cl.: C25D 5/48, C25D 3/12, C09D 5/08, C09D 183/04, C09D 7/65, C22C 38/02, C22C 38/04, C22C 38/06, C22C 38/16, C22C 38/60, C09D 4/00, C09D 183/06, C09D 183/08, C09D 133/08

(54) **SOLUTION COMPOSITION FOR SURFACE TREATMENT OF STEEL SHEET AND STEEL SHEET SURFACE-TREATED USING SAME**
LÖSUNGSZUSAMMENSETZUNG ZUR OBERFLÄCHENBEHANDLUNG VON STAHLBLECH UND DAMIT OBERFLÄCHENBEHANDELTES STAHLBLECH
COMPOSITION DE TYPE SOLUTION POUR LE TRAITEMENT DE SURFACE D'UNE TÔLE D'ACIER ET TÔLE D'ACIER TRAITÉE EN SURFACE À L'AIDE DE CELLE-CI

(30) Priority: 22.12.2017 KR 20170178617
(43) Date of publication of application: 28.10.2020
(73) Proprietor: POSCO, Gyeongsangbuk-do 37859 (KR)
(72) Inventor: CHOI, Chang-Hoon, Seoul 06482 (KR); SON, Won-Ho, Pohang-si, Gyeongsangbuk-do 37877 (KR); HONG, Young-Kwang, Pohang-si, Gyeongsangbuk-do 37877 (KR); CHO, Hong-Lea, Pohang-si, Gyeongsangbuk-do 37877 (KR); KIM, Myung-Soo, Gwangyang-si, Jeollanam-do 57807 (KR)
(74) Representative: Zech, Stefan Markus
(86) International application number: PCT/KR2018/015756
(87) International publication number: WO 2019/124865

(56) References cited:
- JP-A- S6 160 766
- JP-A- 2010 150 620
- KR-A- 20100 079 436
- KR-A- 20130 060 593
- KR-A- 20130 060 593
- KR-A- 20180 035 283
- KR-B1- 101 499 352
- US-A1- 2010 035 055

## Description

### [Technical Field]

The present disclosure relates to a composition for a surface treatment of a steel sheet having excellent resistance to acids such as sulfuric acid and a coated steel sheet to which the composition for the surface treatment is applied.

### [Background Art]

Generally, when a fuel containing sulfur, or the like is burned, sulfur oxides, nitrogen oxides, and the like are generated, and when sulfur oxides, nitrogen oxides, and the like react with water, strong acids such as sulfuric acid, nitric acid, or the like are generated. Such strong acids may adhere to a surface of structure such as metal, or the like, to precipitate dew point corrosion promoting corrosion at a temperature below a dew point. Therefore, facilities such as heat exchangers, ducts, or the like of thermal power plants are exposed to a corrosive environment caused by such strong acids.

To reduce such dew point corrosion, companies have used expensive stainless steel or enameled steel sheets, or the like, or have used sulfuric acid-resistant steel, relatively inexpensive and highly resistant to dew point corrosion. A corrosion reaction proceeds on the surface of the structure, and most materials, except for enamel steel sheets, have been used without a separate coating layer on the surface.

Techniques for preventing dew point corrosion are disclosed in Korean Patent Application Nos. 2013-0151739, 2013-0145717, 2013-0141627, 2013-0130161, and the like. However, all of these techniques are to improve corrosion resistance to strong acids through component adjustment of the steel sheet itself, and are different from the technique of inhibiting dew point corrosion by forming a coating layer on the surface of the steel sheet. US 2010/035055 A1 discloses a galvanized steel sheet treated with a composition comprising *inter alia* particulate silica, a silane coupling agent and an acrylic resin. KR 2013 0060593 A discloses a steel fuel tank coating composition comprising an acrylic resin, silica particles and a silane coupling agent.

### [Disclosure]

### [Technical Problem]

The present disclosure intends to improve corrosion resistance to strong acids, including the above-described dew point corrosion, through coating the surface of the steel sheet, rather than through component adjustment of the steel sheet itself.

### [Technical Solution]

According to an aspect of the present disclosure, a surface-treated steel sheet is provided. The surface-treated steel sheet includes: a steel sheet; a nickel plating layer formed on at least one surface of the steel sheet; and a corrosion-resistant coating layer formed on the nickel plating layer, wherein the corrosion-resistant coating layer includes a product formed by a hydrolysis reaction of silica and an alkoxy silane, and an acrylate-based polymer, and contains 25 to 65 wt% of carbon (C), 20 to 70 wt% of silicon (Si), and 1 to 40 wt% of oxygen (O), and a ratio of bonds of silicon (Si) and oxygen (O)(Si-O bonds) and bonds of silicon (Si) and carbon (C) is 80 to 95%: 5 to 20%.

The corrosion-resistant coating layer may be formed by a solution composition for a surface treatment of a steel sheet including 30 to 50 wt% of colloidal silica containing 5 to 20nm-sized silica particles, 40 to 60 wt% of silane containing three or more alkoxy groups, 5 to 15 wt% of an acrylate-based organic monomer, and 0.01 to 1 wt% of acid.

The colloidal silica may have a silica content of 10 to 45 wt%.

The silane may be at least one selected from a group consisting of vinyl trimethoxy silane, vinyl triethoxy silane, vinyl tri-isopropoxy silane, 3-methacryloxypropyl trimethoxy silane, 2- glycidyloxy propyl trimethoxy silane, 2-glycidyloxy propyl triethoxy silane, 2-aminopropyl triethoxy silane, 2-ureidoalkyl triethoxy silane, tetraethoxysilane, triethoxyphenylsilane, and trimethoxyphenylsilane.

The organic monomer may be at least one selected from a group consisting of acrylic acid glacial, methyl acrylate, ethyl acrylate, butyl acrylate, 2-ethylhexyl acrylate, isobutyl acrylate, tertiary butyl acrylate, tertiary butyl methacrylate, butanediol monoacrylate, lauryl acrylate, dimethylaminoethyl acrylate, and dihydrodicyclopentadienyl acrylate.

The acid may be one or more selected from a group consisting of acetic acid, formic acid, lactic acid, glyconic acid, sulfuric acid, nitric acid, hydrochloric acid, and hydrofluoric acid.

The solution composition for the surface treatment of the steel sheet may further include 1 to 15 wt% of a solvent.

The solvent may be at least one selected from a group consisting of methanol, ethanol, 2-propanol, 2-methoxypropanol, and 2-butoxyethanol.

The solution composition for the surface treatment of the steel sheet may further include 0.1 to 5.0 wt% of an organic resin having a cyclic ring structure.

The organic resin having the cyclic ring structure may be at least one selected from a group consisting of polyurethane; an amino-modified phenolic resin; a polyester resin; an epoxy resin; and polyvinyl butyral or a hybrid resin of two or more thereof.

The corrosion-resistant coating layer may have a thickness of 0.1 to 50 µm.

The nickel plating layer may have a thickness of 0.0005 to 1.12 µm.

The nickel plating layer may have an adhesion amount of 5 to 10,000 mg/ m².

The steel sheet may be sulfuric acid-resistant steel.

The sulfuric acid-resistant steel may include 0.2 wt% or less of C (excluding 0), 0.5 wt% or less of Si (excluding 0), 1.5 wt% or less of Mn (excluding 0), 0.02 wt% or less of S, 0.02 wt% or less of P, 0.1 wt% or less of A1, 0.1 to 0.5 wt% of Cu, and a remainder of Fe and other inevitable impurities, and the sulfuric acid-resistant steel may further include at least one of 0.03 to 0.1 wt% of Co, 0.3 wt% or less of Ni (excluding 0), and 0.3 wt% or less of Sb (excluding 0). Further, the sulfuric acid-resistant steel may formed with at least one concentrated layer selected from a group consisting of Cu, Co, Ni, and Sb having a thickness of 100 to 300 nm is formed, immediately below the surface.

In addition, the sulfuric acid-resistant steel may be a steel sheet containing 0.03 to 0.1 wt% of C, 0.15 to 0.35 wt% of Si, 0.5 to 1.2 wt% of Mn, 0.01 wt% or less of S, 0.015 wt% or less of P, 0.02 to 0.06 wt% of A1, 0.004 wt% or less of N, 0.2 to 0.4 wt% of Cu, and a remainder of Fe and other inevitable impurities, and may further include at least one of 0.1 to 0.25 wt% of Ni, 0.05 to 0.2 wt% of Sb, and 0.03 to 0.1 wt% of Co. The sulfuric acid-resistant steel may be formed with at least one concentrated layer selected from a group consisting of Cu, Co, Ni, and Sb having a thickness of 100 to 300 nm is formed, immediately below the surface.

### [Advantageous Effects]

According to an aspect of the present disclosure, by coating the composition provided in the present disclosure on the surface of the steel sheet, corrosion resistance to sulfuric acid may be provided, even though the composition of the steel sheet may not be changed.

In addition, the surface treatment composition according to the present disclosure may provide excellent corrosion resistance to sulfuric acid and hydrochloric acid to the structure, thereby prolonging a life span of the steel sheet.

Furthermore, local corrosion of the steel sheet may be improved by including a nickel plating layer between the steel sheet and the coating layer.

### [Brief Description Of Drawings]

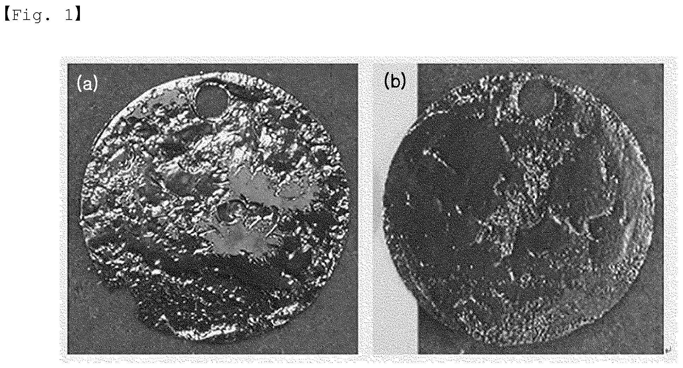

FIG. 1A is a photograph after evaluating 50% of sulfuric acid corrosion of Comparative Example in which the nickel plating layer of the present disclosure is not formed for 72 hours, and FIG. 1B is a photograph after evaluating 50% of sulfuric acid corrosion of Example in which the nickel plating layer of the present disclosure is formed for 96 hours.

### [Best Mode for Invention]

The present disclosure is to provide corrosion resistance to strong acids such as sulfuric acid, hydrochloric acid, or the like, to improve a local corrosion effect by forming a nickel plating layer on the steel sheet. The present disclosure is not intended to provide an acid-resistant steel sheet through adjustment of components of the steel sheet itself, but to provide the steel sheet with a corrosion resistance to strong acids such as sulfuric acid, or the like, that is, to provide acid-resistant properties through coating.

To this end, the present disclosure provides a steel sheet coated with a solution composition for a surface treatment capable of imparting acid resistance. According to an aspect of the present disclosure, a surface-treated steel sheet is provided. The surface-treated steel sheet includes: a steel sheet; a nickel plating layer formed on at least one surface of the steel sheet; and a corrosion-resistant coating layer, wherein the corrosion-resistant coating layer includes a product formed by a hydrolysis reaction of silica and alkoxy silane, and an acrylate-based polymer, 25 to 65 wt% of carbon (C), 20 to 70 wt% of silicon (Si), and 1 to 40 wt% of oxygen (O), and a ratio of bonds of silicon(Si) and oxygen (O) (Si-O bonds) and bonds of silicon (Si) and carbon (C) is 80 to 95%: 5 to 20%.

In addition, the surface-treated steel sheet may be formed by a solution composition for a surface treatment of a steel sheet, including 30 to 50 wt% of colloidal silica containing 5 to 20 nm-sized silica particles; 40 to 60 wt% of silane containing three or more alkoxy groups; 5 to 15 wt% of an acrylate-based organic monomer; and 0.01 to 1 wt% of acid.

The solution composition for the surface treatment provided by the present disclosure includes colloidal silica, silane, organic monomers, and the like.

The colloidal silica contained in the solution composition for the surface treatment of the present disclosure is a main component for forming a surface-treated film of the steel sheet according to the present disclosure by forming a film having a dense structure on the surface of the steel sheet, and provides hardness to the film. In addition, the colloidal silica is chemically combined with silane during the film formation process to be coated on the surface of the steel sheet during drying and curing processes, and serves to provide acid resistance to the steel sheet.

The colloidal silica can be used having a nano-sized particle size, for example, a particle size of 5nm to 50nm can be used. When the particle size of the colloidal silica is less than 5 nm, a surface area of the silica is too wide to cause a shortage of the silane to react therewith, which causes the acid resistance to be inferior. On the other hand, when the particle size of the colloidal silica exceeds 50 nm, porosity between the silica may be high, there may be a problem in which the acid resistance is lowered. It is more preferable that the colloidal silica has a particle size of 5 to 20 nm.

It is more preferable that the colloidal silica includes 10 to 45 wt% of the content of silica. When the content thereof is less than 10 wt%, the content of silica may be insufficient, causing the corrosion resistance of the film to be inferior, and when the content thereof exceeds 45 wt%, silica particles may be excessively precipitated.

The colloidal silica may be contained to be 30 wt% to 50 wt% based on 100 wt% of the solution composition for the metal surface treatment. The content of silica may be a content of 3.0 to 22.5 wt% based on 100 wt% of the whole composition. When the content of the colloidal silica is less than 30 wt%, it may not be sufficiently bonded to the alkoxy silane, such that the hardness may be reduced, and the corrosion resistance to acids may not be secured. On the other hand, when the content of the colloidal silica exceeds 50 wt%, silica, not bonded to the silane, may remain, thereby deteriorating a film formation ability, and thus corrosion resistance to acids may not be secured.

The solution composition for the metal surface treatment of the present disclosure may include silane. The silane may be bonded to silica in a sol-gel reaction, crosslink between silanes, and react with the surface of the steel sheet during the drying process to adhere the film to the steel sheet. As a result, silica, which provides corrosion resistance to acids, may firmly form and maintain a film on the surface of the steel sheet, thereby contributing to increase acid resistance.

Although the silane is not particularly limited, an alkoxy silane having alkoxy groups is preferable, and using an alkoxy silane having three or more alkoxy groups may make to perform a bonding reaction with silica, silane, and a steel sheet to improve adhesion of film to the steel sheet, and dense coating may be formed and the corrosion resistance to acids may be improved, which is more preferable.

The alkoxy silane may include, one or more selected from a group consisting for example, vinyl trimethoxy silane, vinyl triethoxy silane, vinyl tri-isopropoxy silane, 3-methacryloxypropyl trimethoxy silane, 2-glycidyloxy propyl trimethoxy silane, 2-glycidyloxy propyl triethoxy silane, 2-aminopropyl triethoxy silane, 2-ureidoalkyl triethoxy silane, tetraethoxysilane, triethoxyphenylsilane, trimethoxyphenylsilane, and compounds thereof, and they may be stabilized after hydrolysis, which are more preferable.

In the solution composition for the metal surface treatment of the present disclosure, the alkoxy silane may include 40 wt% to 60 wt% based on 100 wt% of the metal surface treatment composition. When the content of the alkoxy silane is less than 40 wt%, the alkoxy silane may not form a sufficient bonding with colloidal silica and a steel sheet, resulting in deteriorating film formation ability, and thus the corrosion resistance to acids may not be secured. On the other hand, when the content of the alkoxy silane exceeds 60 wt%, an organic gas due to thermal decomposition may be discharged, and a large amount of silanol may remain, thereby deteriorating film adhesion, thereby failing to secure corrosion resistance.

The alkoxy silane and silica may form a surface treatment film of a steel sheet formed by a sol-gel reaction. Since the film formed by the alkoxy silane and silica has a rigid property, it is preferable to impart flexibility of the film in an inorganic film. Accordingly, the solution composition for the metal surface treatment of the present disclosure may include an organic monomer.

A condition under which the silica and the alkoxy silane bond and react with each other is a strongly acidic condition. Under the condition, the monomer may undergo a polymer reaction and become a polymer. The polymer generated from such a monomer may fill hard inorganic substances to improve film formation ability, to provide water resistance, and provide flexibility to inorganic substance films. In addition, the monomer may undergo an additional polymerization reaction during a drying process. The process occurs at a temperature lower than that of a curing process of the alkoxy silane and silane, thereby lowering a curing temperature as a whole.

The organic monomer is not particularly limited as long as it can be polymerized under the reaction condition in which silica and silane are bonded to each other, but it is more preferable to use an acrylate-based monomer. The acrylate-based monomer may be preferable since the polymerization reaction occurs under an acidic condition in which the reaction of silica and silane occurs and the monomer has an appropriate size in which the particle size of the polymer generated after the polymerization reaction is not too large.

In addition, an alcohol component may be generated by a sol-gel reaction of the alkoxy silane and silica in the actylate-based monomer. The alcohol component may increase a polymerization rate of the monomer to promote a polymerization reaction. In addition, adjustment of hardness density and adjustment of hardness may be easy, and transparency of the film may be increased, which are advantages. In case of using a cation-type monomer other than the above, obtained polymers may have a particle size which is excessively large, to cause severe gelation.

The acrylate-based monomer may include, for example, acrylic acid glacial, methyl acrylate, ethyl acrylate, N-butyl acrylate, 2-ethylhexyl acrylate, isobutyl acrylate, tertiary butyl acrylate, tertiary butyl methacrylate, butanediol monoacrylate, lauryl acrylate, dimethylaminoethyl acrylate, dihydrodicyclopentadienyl acrylate, and the like. These may be used alone or in a combination of two or more thereof.

The organic monomer may contribute to film formation during coating and a crosslinking reaction, and may be contained in the content of 5 wt% to 15 wt% based on the content of 100 wt% of the solution composition for the metal surface treatment. When the content of the organic monomer is less than 5 wt% based on 100 wt% of the solution composition for the metal surface treatment, sufficient bonding may not be formed with the silica and alkoxy silane polymer, such that the film formation ability may be deteriorated, thereby failing to secure corrosion resistance. On the other hand, when the content of the organic monomer exceeds 15 wt%, the water resistance may be lowered or the acid corrosion resistance may be reduced due to unreacted residual monomer.

The solution composition for the metal surface treatment of the present disclosure may also include an acid for an acidity control. The acid may serve to improve stability of the alkoxy silane while assisting the hydrolysis reaction of alkoxy silane, and it is preferable to adjust the acidity of the solution to a pH range of 1 to 5. To this end, the acid may be contained in a content of 0.01 to 1.00 wt% based on 100 wt% of the metal surface treatment composition. When the content of the acid is less than 0.01 wt% based on 100 wt% of the solution composition for the metal surface treatment, the hydrolysis time may increase and the solution stability of the whole solution composition may be deteriorated. When the content of the acid exceeds 1.00 wt% based on 100 wt% of the solution composition for the metal surface treatment, corrosion of the steel sheet may occur and control of the molecular weight of the resin may be difficult.

Specific kinds of the acid is not particularly limited, but preferably one or more selected from a group consisting of organic acids such as acetic acid, formic acid, lactic acid, glyconic acid, and the like, organic-inorganic acids such as sulfuric acid, nitric acid, hydrochloric acid, hydrofluoric acid, and the like, and compounds thereof may be included in the solution composition for the metal surface treatment of the present disclosure.

The solution composition for the metal surface treatment of the present disclosure may include a solvent. The solvent may play a role in compatibility and hydrolysis of silane with respect to water, wetting of a resin composition for the metal surface, control of a drying rate, and the like, and the solvent may be contained in a content of 1 wt% to 15 wt% based on 100 wt% of the metal surface treatment composition. When the content of the solvent is less than 1 wt%, the compatibility may be lowered and a storage ability of the coating solution may be deteriorated and the corrosion resistance after coating may not be secured. On the other hand, when the content of the solvent exceeds 15 wt% based on 100 wt% of the metal surface treatment composition, viscosity may become too low to lower the stability of the solution and may not secure corrosion resistance after coating.

The specific kind of the solvent in the solution composition for the metal surface treatment of the present disclosure is not particularly limited, but preferably, may include one or more selected from a group consisting of methanol, ethanol, 2-propanol, 2-methoxypropanol, 2-butoxyethanol, and the like.

Further, the present disclosure may further include an organic resin. The organic resin may serve to enhance adhesion with a material to be coated and improve drying at room temperatures, and it is preferable that the organic resin includes 0.1 wt% to 5.0 wt% based on 100 wt% of the metal surface treatment composition. When the content of the organic resin is less than 0.1 wt%, a synergistic effect due to addition may be insignificant, and when the content of the organic resin exceeds 5.0 wt%, water resistance may be lowered and peeling of a coating film, or the like, may occur.

In the metal surface treatment composition of the present disclosure, the organic resin preferably has a resin having a cyclic ring structure in a resin structure. The cyclic ring structure in the resin structure may be relatively stable from various reactions and contribute to improve acid resistance.

The organic resin having the cyclic ring structure in the resin structure may include, for example, polyurethane, an amino-modified phenol resin, a polyester resin, an epoxy resin, a polyvinyl butyral, and the like. The resin may be used in a hybrid type of each of the resins described above, and these resins may be used singly or in combinations thereof.

The solution composition for the metal surface treatment according to the present disclosure may be coated onto the surface of the steel sheet, and be dried to form a surface treatment film having excellent corrosion resistance to acids. The coating is not particularly limited as long as a commonly used coating method may be applied. For example, methods of roll coating, spraying, immersion, spray squeezing, immersion squeezing, or the like may be applied, if required, two or more methods may be used in combination.

On the other hand, the drying may be performed by applying a method of using a hot-air drying furnace or an induction heating furnace, and the drying may be performed at a temperature ranging 150 to 420°C on a basis of a final temperature (PMT) of a material of a steel sheet. When the drying temperature does not reach a temperature of 150°C or higher on the basis of PMT, a proper solid film layer may not be formed and a liquid residual solution may be removed in a further process, failing to secure desired corrosion resistance. In addition, when the drying temperature exceeds 420°C on the basis of PMT, an organic resin layer in the film layer may be oxidized (meaning burned), such that the structure of the film layer may change and the desired corrosion resistance may not be secured. Here, for example, when drying is performed by the hot-air drying furnace, an internal temperature of the hot-air drying furnace may be set to be 150 to 420°C.

A surface treatment coating of a steel sheet according to the present disclosure is not particularly limited, and may be performed through a continuous process, wherein a speed of the continuous process may be, for example, 60 to 180 mpm(m/min).

The surface-treated coating steel sheet thus obtained may have a thickness of a film of 0.1 to 50 µm in a thickness after drying. When the thickness of the film is less than 0.1 µm, there may be a problem in which the film is insufficient and the corrosion resistance is insufficient. When the thickness of the film exceeds 50 µm, there may be a problem in which a solid film may not be formed due to insufficient drying during the coating process.

The film may be an organic-inorganic composite film, and the film according to the present disclosure is bonded by a hydrolysis reaction of silica and alkoxy silane, and other alkoxy groups of the alkoxy silane bond with the steel sheet to form a solid film on the surface of the steel sheet.

Therefore, it can be said that the film according to the present disclosure has a hydrolysis reaction product of alkoxy silane and silica on the surface of the steel sheet. Alcohol may be generated in the course of the hydrolysis reaction, and the like, but the alcohol may be volatilized during the drying process. The film may provide corrosion resistance for the steel sheet, for example, provide excellent corrosion resistance to acids.

On the other hand, an organic monomer of the present disclosure may be polymerized to be present as a polymer. The organic monomer is an acrylate-based monomer, and an acrylate-based polymer, a polymer of the organic monomer of the films, may be present on the surface of the steel sheet.

As described above, the organic-inorganic composite film, formed by applying the solution composition for the surface treatment of the steel sheet of the present disclosure may include 25 to 65 wt% of carbon (C), 20 to 70 wt% of silicon (Si), and 1 to 40 wt% of oxygen (O). It can be confirmed by analysis methods such as electron probe micro-analysis (EPMA), energy-dispersive X-ray spectroscopy (EDS), and the like.

Thereamong, silicon may be present in combination with oxygen or carbon. The ratio between Si-O bond, which silicon bonds to oxygen, and Si-C bond, which silicon bonds to carbon has a range of 80 to 95% (Si-O bond) to 5 to 20% (Si-C bond).

On the other hand, when an organic resin is further included according to the present disclosure, the organic resin may be contained in the film in the content of 0.1 to 5.0 wt%. The film of the present disclosure may obtain good corrosion resistance to sulfuric acid, or the like, even though it is applied to ordinary steel sheets, for example, to zinc-based plating steel sheets. Particularly, as steel with increased corrosion resistance to sulfuric acid, or the like, when the film of the present disclosure is applied to sulfuric acid resistance steel having strong corrosion resistance to acids by forming a thin film on the surface of the steel when exposed to an acidic corrosive environment, as a steel having high corrosion resistance to sulfuric acid, and the like, a synergistic reaction with the corrosion resistance of the steel itself to sulfuric acid, or the like, may occur, such that remarkably excellent sulfuric acid corrosion resistance may be obtained.

The sulfuric acid-resistant steel is not particularly limited, but may be a steel sheet, for example, containing 0.2 wt% or less of C (excluding 0), 0.5 wt% or less of Si (excluding 0), 1.5 wt% or less of Mn (excluding 0), 0.02 wt% or less of S, 0.02 wt% or less of P, 0.1 wt% or less of A1, 0.008 wt% or less of N, and 0.1 to 0.5 wt% of Cu, and a remainder of Fe and other inevitable impurities. In this case, it may further include 0.03 to 0.1 wt% of Co and 0.3 wt% or less of Ni and Sb (excluding 0), and in this case, the sulfuric acid-resistant steel may be steel in which at least one concentrated layer selected from a group consisting of Cu, Co, Ni, and Sb in a thickness of 100 to 300 nm, is formed immediately below the surface.

More preferably, the sulfuric acid-resistant steel may include, for example, 0.03 to 0.1 wt% of C, 0.15 to 0.35 wt% of Si, 0.5 to 1.2 wt% of Mn, 0.01 wt% or less of S, 0.015 wt% or less of P, 0.02 to 0.06 wt% or less of A1, 0.004 wt% or less of N, and 0.2 to 0.4 wt% of Cu, and a remainder of Fe and other unavoidable impurities. In this case, the sulfuric acid- resistant steel may further include at least one of 0.1 to 0.25 wt% of Ni, 0.05 to 0.2 wt% of Sb, and 0.03 to 0.1 wt% of Co, and the sulfuric acid-resistant steel may be formed with at least one concentrated layer selected from a group consisting of Cu, Co, Ni, and Sb having a thickness of 100 to 300 nm, immediately below the surface.

The steel sheet coated with the solution composition for the surface treatment according to the present disclosure is excellent in corrosion resistance by itself, but due to the characteristics of the surface treatment coating, local corrosion may occur when exposed to a long-term corrosion environment.

Accordingly, in the present disclosure, a step of forming a nickel plating layer on at least one surface of the steel sheet may be included before coating the solution composition for the surface treatment on the surface of the steel sheet.

A method for forming the nickel plating layer is not particularly limited, and a known method can be used.

Meanwhile, it is preferable that the nickel plating layer has an adhesion amount of 5 to 10,000 mg/m², and if the adhesion amount thereof is less than 5 mg/m², it may not be possible to secure an effect of suppressing local corrosion due to nickel plating.

On the other hand, if the adhesion amount of the nickel plating layer exceeds 10,000 000 mg/m², a production price is too high, which may cause a problem of failing to secure economic feasibility.

It is preferable that the nickel plating layer has a thickness of 0.0005 to 1.12 µm. If the thickness thereof is less than 0.0005 µm, it may not have an effect of improving local corrosion, and if the thickness thereof is exceeds 1.12 µm, the production cost may be high due to an excessive amount of plating, which may decrease profitability.

### [Mode for Invention]

### Example

Hereinafter, the present disclosure will be described more specifically with reference to specific examples. The following examples are provided to aid in understanding of the present disclosure, and the scope of the present disclosure is not limited thereto.

### Manufacturing Example

### Steel sheet with nickel plating layer

To form a nickel layer on a surface of the steel sheet, a plating solution having a nickel concentration of was plated by electroplating by applying a current of 7.7 kA at 55°C.

### Steel sheet coated with surface treatment composition

After the addition of tetraethoxysilane with ethanol as a solvent and acetic acid as an acidity regulator to colloidal silica Ludox HSA (solid content 30%, particle size 12nm, W.R. Grace & Co. - Conn.), respectively, the mixture was stirred for about 5 hours while cooling, such that the temperature thereof did not exceed about 50°C.

In this case, the colloidal silica may be surface-modified by silane, and the silane may be hydrolyzed. After a sufficient reaction, ethyl acrylate as a monomer and poly(meth)acrylic acid as an organic resin were separately added and reacted for about 24 hours.

After coating the steel sheet with the nickel plating layer (ANCOR-CS steel made by POSCO) on each surface treatment composition in a roll coating method, the steel sheet was put in a hot air drying furnace at about 250°C and heated to PMT 250°C of the steel sheet to dry and cure the composition, such that a surface-treated steel sheet was prepared, respectively.

An adhesion amount of nickel, a thickness of a coating layer, and a content of each component of the coating layer were shown in Table 1 below.

**[Table 1]**

| | Ni Plating amount (mg/m²) | Thickn ess of coatin g layer( µm) | Colloida 1 sillica | Silane | Solvent | Acidity regulat or | Monomer | Organic resin |
|---|---|---|---|---|---|---|---|---|
| Example 1 | 5685 | 36 | 36.00% | 45.00% | 10.00% | 0.50% | 8.00% | 0.50% |
| Example 2 | 1190 | 19 | 42.00% | 44.00% | 3.40% | 0.60% | 10.00% | 0.00% |
| Example 3 | 7273 | 21 | 32.00% | 45.00% | 10.00% | 0.60% | 12.00% | 0.40% |
| Example 4 | 352 | 4 | 35.00% | 52.00% | 4.00% | 0.50% | 6.00% | 2.50% |
| Comparati ve Example 1 | 1050 | 35 | 53.00% | 40.00% | 1.00% | 0.20% | 5.00% | 0.80% |
| Comparati ve Example 2 | 1912 | 32 | 50.00% | 22.00% | 14.00% | 0.80% | 9.00% | 4.20% |
| Comparati ve Example 3 | 3448 | 32 | 42.00% | 40.00% | 5.00% | 2.50% | 10.00% | 0.50% |
| Comparati ve Example 4 | 6774 | 43 | 45.00% | 48.00% | 0.00% | 0.50% | 6.00% | 0.50% |
| Comparati ve Example 5 | 1592 | 33 | 35.00% | 41.00% | 5.00% | 0.60% | 18.00% | 0.40% |
| Comparati ve Example 6 | 4580 | 6 | 36.00% | 42.00% | 4.80% | 0.20% | 7.00% | 10.00% |
| Comparati ve Example 7 | 733 | 1 | 30.00% | 62.00% | 1.00% | 0.70% | 5.60% | 0.70% |
| Comparati ve Example 8 | 7083 | 0.03 | 42.00% | 44.00% | 3.40% | 0.60% | 10.00% | 0.00% |
| Comparati ve Example 9 | 2 | 26 | 32.00% | 45.00% | 10.00% | 0.60% | 12.00% | 0.40% |
| Comparati ve Example 10 | 355 | 65 | 32.00% | 51.00% | 11.00% | 0.10% | 5.00% | 0.90% |

### Example

### 1. Sulfuric acid corrosion resistance

After the surface-treated steel sheet was immersed in a 50 vol% of aqueous solution of sulfuric acid maintained at 70°C for 6 hours, and then corrosion characteristics were observed. The evaluation criteria thereof are as follows.
∘: less than 15mg/cm²/hr
△: 15 or more and less than 65mg/cm²/hr
×: 65mg/cm²/hr or more

### 2. Composite corrosion resistance

After the surface-treated steel sheet was immersed in a mixed aqueous solution of 16.9 vol% sulfuric acid and 0.35 vol% hydrochloric acid maintained at 60°C for 6 hours, and then corrosion characteristics were observed under sulfuric acid-hydrochloric acid composite conditions. The evaluation criteria thereof are as follows.
∘: less than 3mg/cm²/hr
△: 3 or more and less than 6mg/cm²/hr
×: 6mg/cm²/hr or more

### 3. Minimum thickness (local corrosion)

After the surface-treated steel sheet was immersed in a 50 vol% aqueous solution of sulfuric acid maintained at 70°C for corrosion for 96 hours, the thinnest thickness was observed by measuring a thickness of total 64 points by 8 points in horizontal and vertical directions. The evaluation criteria thereof are as follows.
∘: 0.10mm or more
△: 0.05mm or more and less than 0.10mm
×: less than 0.05mm

### 4. Coating film adhesion

The surface-treated steel sheet was cut to a size of 150cm×75cm (length×width) to prepare a specimen, a surface of the specimen was lined up to form 100 squares in each of width and length at intervals of 1mm, and a portion in which the 100 squares are formed was pushed up to a height of 6 mm using an Erichsen tester, and a peeling tape (NB-1, manufactured by Ichiban Co., Ltd.) was attached to the push-up portion attached and then peeled off to observe whether or not the Erichsen portion was peeled off. The evaluation criteria thereof are as follows.
∘: When there is no peeling of a surface
△: When peeling of the surface is 1 to 3 out of 100
×: When peeling of the surface exceeds 3 out of 100

### 5. Sulfuric acid resistance after processing

After the surface-treated steel sheet was prepared to a steel sheet having a diameter of 38 mm, and the steel sheet was processed to a height of 7 mm using an Erichsen cupping tester, and was then immersed in a 50 vol% aqueous solution of sulfuric acid maintained at 70°C for 6 hours, and corrosion reduction of the specimen was observed. The evaluation criteria thereof are as follows.
∘: less than 15mg/cm²/hr
△: 15 or more and less than 65mg/cm²/hr
×: 65mg/cm²/hr or more

The results of measuring the physical properties of the surface-treated steel sheets prepared in Examples 1 to 4 and Comparative Examples 1 to 10 were shown in Table 2 below.

**[Table 2]**

| | Sulfuric acid corrosion resistance | Composite corrosion resistance | Minimum thickness (local corrosion) | Coating film adhesion | Sulfuric acid corrosion resistance after processing |
|---|---|---|---|---|---|
| Example 1 | O | O | O | O | O |
| Example 2 | O | O | O | O | O |
| Example 3 | O | O | O | O | O |
| Example 4 | O | O | O | O | O |
| Comparative example 1 | X | X | O | X | O |
| Comparative example 2 | X | X | O | X | O |
| Comparative example 3 | X | X | O | O | O |
| Comparative example 4 | X | X | O | X | O |
| Comparative example 5 | X | X | O | O | O |
| Comparative example 6 | X | X | O | O | O |
| Comparative example 7 | X | X | O | X | O |
| Comparative example 8 | X | X | O | O | X |
| Comparative example 9 | O | O | X | O | O |
| Comparative example 10 | O | O | O | X | X |

As shown in Table 2, it can be seen that in Examples 1 to 4 according to the present disclosure, sulfuric acid corrosion resistance, composite corrosion resistance, coating film adhesion, and sulfuric acid corrosion resistance after processing are very excellent. In addition, surface defects such as a boiling phenomenon, or the like, did not occur during the coating and drying process, thereby securing a very good surface quality. Furthermore, after a corrosion evaluation in 50% sulfuric acid for 96 hours, it shows a minimum thickness of 0.10 mm or more, and it can be seen that local corrosion resistance is improved by the nickel plating layer.

However, in the case of Comparative Example 1, it can be seen that sulfuric acid corrosion resistance and composite corrosion resistance are significantly reduced. This is because a content of colloidal silica was excessively added, and a large amount of residual silica remained in a reaction with the silane, which prevented film formation.

Moreover, in the case of Comparative Example 2, results were showed that sulfuric acid corrosion resistance and composite corrosion resistance are lowered. This is because a surface of the colloidal silica was not sufficiently modified as in Comparative Example 1 due to an insufficient silane content, so that a large amount of residual silica prevented film formation.

Meanwhile, Comparative Example 3 shows a case in which an acidity adjusting agent was excessively added, and it can be seen that a molecular weight of an organic-inorganic mixed resin in silica and monomers modified with silane and organic resin is excessively increased to cause gelation of a solution, or even when coated, the sulfuric acid corrosion resistance or the composite corrosion resistance decreases. In addition, corrosion of the steel sheet may proceed due to the residual acidity regulator.

In addition, it can be seen that Comparative Example 4 does not contain a solvent, so that gelation easily occurs in a process of preparing a solution composition, and even if coating is performed, sulfuric acid corrosion resistance and composite corrosion resistance decrease.

Comparative Example 5 and Comparative Example 6 show a case in which the monomer and the organic resin were added in excess, respectively, and it can be seen that sulfuric acid corrosion resistance and composite corrosion resistance deteriorated when the content of the organic component compared to the inorganic component was excessive.

Comparative Example 7 shows a case in which the content of the silane is added in excess, it can be seen that the organic gas due to thermal decomposition in a process of preparing a solution composition can be discharged and the sulfuric acid resistance after coating is reduced due to a large amount of residual silane.

In Comparative Example 8, it can be seen that the thickness of the coating layer was insufficient, resulting in insufficient sulfuric acid corrosion resistance, composite corrosion resistance, and sulfuric acid corrosion resistance after processing.

Meanwhile, it can be seen that in Comparative Example 9, a nickel plating amount was insufficient and a minimum thickness (local corrosion resistance) was insufficient.

In addition, it can be seen that Comparative Example 10 is inferior in coating film adhesion and sulfuric acid corrosion resistance after processing due to a crack in a coating layer generated during processing because a thickness of the coating layer is too thick.

Meanwhile, FIG. 1A is a photograph after 72 hours 50% sulfuric acid corrosion evaluation of the Comparative Example in which the nickel plating layer of the present disclosure is not formed, and FIG. 1B is a photograph after 96 hours 50% sulfuric acid corrosion evaluation of Example in which the nickel plating layer of the present disclosure is formed. It can be seen that (a) in which the nickel plating layer is not formed has a left edge falling off, while (b) in which the nickel plating layer is formed does not have any falling off parts after evaluation for 96 hours under the same conditions.

While example embodiments have been shown and described above, it will be apparent to those skilled in the art that modifications and variations could be made without departing from the scope of the present inventive concept as defined by the appended claims.

## Claims

1. A surface-treated steel sheet, comprising:
a steel sheet;
a nickel plating layer formed on at least one surface of the steel sheet; and
a corrosion-resistant coating layer formed on the nickel plating layer,
wherein the corrosion-resistant coating layer comprises a product formed by a hydrolysis reaction of silica and an alkoxy silane, and an acrylate-based polymer, and contains 25 to 65 wt% of carbon (C), 20 to 70 wt% of silicon (Si), and 1 to 40 wt% of oxygen (O), and
a ratio of bonds of silicon(Si) and oxygen (O) (Si-O bonds) and bonds of silicon (Si) and carbon (C) is 80 to 95%: 5 to 20%.

2. The surface-treated steel sheet of claim 1, wherein the corrosion-resistant coating layer is formed by a solution composition for a surface treatment of a steel sheet, including
30 to 50 wt% of colloidal silica containing 5 to 20 nm - sized silica particles;
40 to 60 wt% of silane containing three or more alkoxy groups;
5 to 15 wt% of an acrylate-based organic monomer; and
0.01 to 1 wt% of acid.

3. The surface-treated steel sheet of claim 2, wherein the colloidal silica has a silica content of 10 to 45 wt%.

4. The surface-treated steel sheet of claim 2, wherein the silane is at least one selected from a group consisting of vinyl trimethoxy silane, vinyl triethoxy silane, vinyl tri-isopropoxy silane, 3-methacryloxypropyl trimethoxy silane, 2-glycidyloxy propyl trimethoxy silane, 2-glycidyloxy propyl triethoxy silane, 2-aminopropyl triethoxy silane, 2-ureidoalkyl triethoxy silane, tetraethoxysilane, triethoxyphenylsilane, and trimethoxyphenylsilane.

5. The surface-treated steel sheet of claim 2, wherein the organic monomer is at least one selected from a group consisting of acrylic acid glacial, methyl acrylate, ethyl acrylate, butyl acrylate, 2-ethylhexyl acrylate, isobutyl acrylate, tertiary butyl acrylate, tertiary butyl methacrylate, butanediol monoacrylate, lauryl acrylate, dimethylaminoethyl acrylate, and dihydrodicyclopentadienyl acrylate.

6. The surface-treated steel sheet of claim 2, wherein the acid is one or more selected from a group consisting of acetic acid, formic acid, lactic acid, glyconic acid, sulfuric acid, nitric acid, hydrochloric acid and hydrofluoric acid.

7. The surface-treated steel sheet of claim 2, wherein the solution composition for the surface treatment of the steel sheet further comprises 1 to 15 wt% of a solvent.

8. The surface-treated steel sheet of claim 2, wherein the solution for the surface treatment of the steel sheet further comprises 0.1 to 5.0 wt% of an organic resin having a cyclic ring structure.

9. The surface-treated steel sheet of claim8, wherein the organic resin having the cyclic ring structure is a hybrid resin of at least one or two or more selected from a group consisting of polyurethane; an amino-modified phenolic resin; a polyester resin; an epoxy resin; and polyvinyl butyral.

10. The surface-treated steel sheet of claim 1, wherein the corrosion-resistant coating layer has a thickness of 0.1 to 50 µm.

11. The surface-treated steel sheet of claim 1, wherein the nickel plating layer has a thickness of 0.0005 to 1.12 µm.

12. The surface-treated steel sheet of claim 1, wherein the nickel plating layer has an adhesion amount of 5 to 10,000mg/m².

13. The surface-treated steel sheet of claim1, wherein the steel sheet is sulfuric acid-resistant steel comprising, 0.2 wt% or less of C (excluding 0), 0.5 wt% or less of Si (excluding 0), 1.5 wt% or less of Mn (excluding 0), 0.02 wt% or less of S, 0.02 wt% or less of P, 0.1 wt% or less of Al, 0.008 wt% or less of N, and 0.1 to 0.5 wt% of Cu, a remainder of Fe and other inevitable impurities.

14. The surface-treated steel sheet of claim 13, wherein the sulfuric acid-resistant steel further comprises at least one of 0.03 to 0.1 wt% of Co, 0.3 wt% or less of Ni(excluding 0), and 0.3 wt% or less of Sb (excluding 0).

15. The surface-treated steel sheet of claim 14, wherein the sulfuric acid-resistant steel is formed with at least one concentrated layer selected from a group consisting of Cu, Co, Ni, and Sb having a thickness of 100 to 300 nm immediately below the surface.

## Patentansprüche

1. Oberflächenbehandeltes Stahlblech, umfassend:
ein Stahlblech;
eine Vernickelungsschicht, die auf mindestens einer Oberfläche des Stahlblechs ausgebildet ist; und
eine korrosionsbeständige Beschichtungsschicht, die auf der Vernickelungsschicht ausgebildet ist,
wobei die korrosionsbeständige Beschichtungsschicht ein Produkt, das durch eine Hydrolysereaktion von Siliciumdioxid und einem Alkoxysilan gebildet ist, und ein acrylatbasiertes Polymer umfasst und 25 bis 65 Gew.-% Kohlenstoff (C), 20 bis 70 Gew.-% Silizium (Si) und 1 bis 40 Gew.-% Sauerstoff (O) enthält und
ein Verhältnis von Silizium(Si)- und Sauerstoff(O)-Bindungen (Si-O-Bindungen) und Silizium(Si)- und Kohlenstoff(C)-Bindungen 80 bis 95 % : 5 bis 20 % beträgt.

2. Oberflächenbehandeltes Stahlblech nach Anspruch 1, wobei die korrosionsbeständige Beschichtungsschicht durch eine Lösungszusammensetzung zur Oberflächenbehandlung eines Stahlblechs ausgebildet ist, beinhaltend
30 bis 50 Gew.-% kolloidales Siliciumdioxid, das Siliciumdioxidpartikel in der Größe von 5 bis 20 nm enthält;
40 bis 60 Gew.-% Silan, das drei oder mehr Alkoxygruppen enthält;
5 bis 15 Gew.-% eines acrylatbasierten organischen Monomers; und
0,01 bis 1 Gew.-% Säure.

3. Oberflächenbehandeltes Stahlblech nach Anspruch 2, wobei das kolloidale Siliciumdioxid einen Siliciumdioxidgehalt von 10 bis 45 Gew.-% aufweist.

4. Oberflächenbehandeltes Stahlblech nach Anspruch 2, wobei das Silan mindestens eines ist, das ausgewählt ist aus einer Gruppe bestehend aus Vinyltrimethoxysilan, Vinyltriethoxysilan, Vinyltriisopropoxysilan, 3-Methacryloxypropyltrimethoxysilan, 2-Glycidyloxypropyltrimethoxysilan, 2-Glycidyloxypropyltriethoxysilan, 2-Aminopropyltriethoxysilan, 2-Ureidoalkyltriethoxysilan, Tetraethoxysilan, Triethoxyphenylsilan und Trimethoxyphenylsilan.

5. Oberflächenbehandeltes Stahlblech nach Anspruch 2, wobei das organische Monomer mindestens eines ist, das ausgewählt ist aus einer Gruppe bestehend aus kristallisierter Acrylsäure, Methylacrylat, Ethylacrylat, Butylacrylat, 2-Ethylhexylacrylat, Isobutylacrylat, tert-Butylacrylat, tert-Butylmethacrylat, Butanediolmonoacrylat, Laurylacrylat, Dimethylaminoethylacrylat und Dihydrodicyclopentadienylacrylat.

6. Oberflächenbehandeltes Stahlblech nach Anspruch 2, wobei die Säure eine oder mehrere ist, die ausgewählt ist/sind aus einer Gruppe bestehend aus Essigsäure, Ameisensäure, Milchsäure, Aldohexonsäure, Schwefelsäure, Salpetersäure, Chlorwasserstoffsäure und Fluorwasserstoffsäure.

7. Oberflächenbehandeltes Stahlblech nach Anspruch 2, wobei die Lösungszusammensetzung zur Oberflächenbehandlung des Stahlblechs ferner 1 bis 15 Gew.-% eines Lösungsmittels umfasst.

8. Oberflächenbehandeltes Stahlblech nach Anspruch 2, wobei die Lösung zur Oberflächenbehandlung des Stahlblechs ferner 0,1 bis 5,0 Gew.-% eines organischen Harzes mit einer cyclischen Ringstruktur umfasst.

9. Oberflächenbehandeltes Stahlblech nach Anspruch 8, wobei das organische Harz mit der cyclischen Ringstruktur ein Hybridharz von mindestens einem oder zwei oder mehreren ist, das/die ausgewählt ist/sind aus einer Gruppe bestehend aus Polyurethan; einem aminomodifizierten Phenolharz; einem Polyesterharz; einem Epoxidharz und Polyvinylbutyral.

10. Oberflächenbehandeltes Stahlblech nach Anspruch 1, wobei die korrosionsbeständige Beschichtungsschicht eine Dicke von 0,1 bis 50 µm aufweist.

11. Oberflächenbehandeltes Stahlblech nach Anspruch 1, wobei die Vernickelungsschicht eine Dicke von 0,0005 bis 1,12 µm aufweist.

12. Oberflächenbehandeltes Stahlblech nach Anspruch 1, wobei die Vernickelungsschicht eine Adhäsionsmenge von 5 bis 10.000 mg/m² aufweist.

13. Oberflächenbehandeltes Stahlblech nach Anspruch 1, wobei das Stahlblech ein schwefelsäurebeständiger Stahl ist, umfassend 0,2 Gew.-% oder weniger C (mit Ausnahme von 0), 0,5 Gew.-% oder weniger Si (mit Ausnahme von 0), 1,5 Gew.-% oder weniger Mn (mit Ausnahme von 0), 0,02 Gew.-% oder weniger S, 0,02 Gew.-% oder weniger P, 0,1 Gew.-% oder weniger Al, 0,008 Gew.-% oder weniger N und 0,1 bis 0,5 Gew.-% Cu, einen Rest Fe und andere unvermeidliche Verunreinigungen.

14. Oberflächenbehandeltes Stahlblech nach Anspruch 13, wobei der schwefelsäurebeständige Stahl ferner mindestens eines von 0,03 bis 0,1 Gew.-% Co, 0,3 Gew.-% oder weniger Ni (mit Ausnahme von 0) und 0,3 Gew.-% oder weniger Sb (mit Ausnahme von 0) umfasst.

15. Oberflächenbehandeltes Stahlblech nach Anspruch 14, wobei der schwefelsäurebeständige Stahl mit mindestens einer konzentrierten Schicht, die ausgewählt ist aus einer Gruppe bestehend aus Cu, Co, Ni und Sb, mit einer Dicke von 100 bis 300 nm unmittelbar unter der Oberfläche ausgebildet ist.

## Revendications

1. Tôle d'acier traitée en surface, comprenant:
une tôle d'acier;
une couche de placage au nickel formée sur au moins une surface de la tôle d'acier; et
une couche de revêtement résistante à la corrosion formée sur la couche de placage au nickel,
dans laquelle la couche de revêtement résistante à la corrosion comprend un produit formé par une réaction d'hydrolyse de silice et d'un alcoxysilane, et d'un polymère à base d'acrylate, et contient 25 à 65 % en poids de carbone (C), 20 à 70 % en poids de silicium (Si), et 1 à 40 % en poids d'oxygène (O), et
un rapport entre des liaisons de silicium (Si) et d'oxygène (O) (liaisons Si-O) et des liaisons de silicium (Si) et de carbone (C) est de 80 à 95 %:5 à 20 %.

2. Tôle d'acier traitée en surface selon la revendication 1, dans laquelle la couche de revêtement résistante à la corrosion est formée par une composition de type solution pour un traitement de surface d'une tôle d'acier, incluant
30 à 50 % en poids de silice colloïdale contenant des particules de silice d'une taille de 5 à 20 nm;
40 à 60 % en poids de silane contenant trois groupes alcoxy ou plus;
5 à 15 % en poids d'un monomère organique à base d'acrylate; et
0,01 à 1 % en poids d'acide.

3. Tôle d'acier traitée en surface selon la revendication 2, dans laquelle la silice colloïdale a une teneur en silice de 10 à 45 % en poids.

4. Tôle d'acier traitée en surface selon la revendication 2, dans laquelle le silane est au moins un élément choisi dans un groupe consistant en le vinyl triméthoxy silane, le vinyl triéthoxy silane, le vinyl tri-isopropoxy silane, le 3-méthacryloxypropyl triméthoxy silane, le 2-glycidyloxy propyl triméthoxy silane, le 2-glycidyloxy propyl triéthoxy silane, le 2-aminopropyl triéthoxy silane, le 2-uréidoalkyl triéthoxy silane, le tétraéthoxysilane, le triéthoxyphénylsilane et le triméthoxyphénylsilane.

5. Tôle d'acier traitée en surface selon la revendication 2, dans laquelle le monomère organique est au moins un élément choisi dans un groupe consistant en l'acide acrylique glacial, l'acrylate de méthyle, l'acrylate d'éthyle, l'acrylate de butyle, l'acrylate de 2-éthylhexyle, l'acrylate d'isobutyle, l'acrylate de butyle tertiaire, le méthacrylate de butyle tertiaire, le monoacrylate de butanediol, l'acrylate de lauryle, l'acrylate de diméthylaminoéthyle et l'acrylate de dihydrodicyclopentadiényle.

6. Tôle d'acier traitée en surface selon la revendication 2, dans laquelle l'acide est un élément ou plus choisi dans un groupe consistant en l'acide acétique, l'acide formique, l'acide lactique, l'acide glyconique, l'acide sulfurique, l'acide nitrique, l'acide chlorhydrique et l'acide fluorhydrique.

7. Tôle d'acier traitée en surface selon la revendication 2, dans laquelle la composition de type solution pour le traitement de surface de la tôle d'acier comprend en outre 1 à 15 % en poids d'un solvant.

8. Tôle d'acier traitée en surface selon la revendication 2, dans laquelle la solution pour le traitement en surface de la tôle d'acier comprend en outre de 0,1 à 5,0 % en poids d'une résine organique ayant une structure en anneau cyclique.

9. Tôle d'acier traitée en surface selon la revendication 8, dans laquelle la résine organique ayant la structure en anneau cyclique est une résine hybride d'au moins un ou deux éléments ou plus choisis dans un groupe consistant en le polyuréthane; une résine phénolique amino-modifiée; une résine polyester; une résine époxy; et le polyvinylbutyral.

10. Tôle d'acier traitée en surface selon la revendication 1, dans laquelle la couche de revêtement résistante à la corrosion a une épaisseur de 0,1 à 50 µm.

11. Tôle d'acier traitée en surface selon la revendication 1, dans laquelle la couche de placage au nickel a une épaisseur de 0,0005 à 1,12 µm.

12. Tôle d'acier traitée en surface selon la revendication 1, dans laquelle la couche de placage au nickel a un taux d'adhérence de 5 à 10 000 mg/m².

13. Tôle d'acier traitée en surface selon la revendication 1, dans laquelle la tôle d'acier est un acier résistant à l'acide sulfurique comprenant, 0,2 % en poids ou moins de C (à l'exclusion de 0), 0,5 % en poids ou moins de Si (à l'exclusion de 0), 1,5 % en poids ou moins de Mn (à l'exclusion de 0), 0,02 % en poids ou moins de S, 0,02 % en poids ou moins de P, 0,1 % en poids ou moins d'Al, 0,008 % en poids ou moins de N, et 0,1 à 0,5 % en poids de Cu, le reste étant du Fe et d'autres impuretés inévitables.

14. Tôle d'acier traitée en surface selon la revendication 13, dans laquelle l'acier résistant à l'acide sulfurique comprend en outre au moins un élément parmi 0,03 à 0,1 % en poids de Co, 0,3 % en poids ou moins de Ni (à l'exclusion de 0), et 0,3 % en poids ou moins de Sb (à l'exclusion de 0).

15. Tôle d'acier traitée en surface selon la revendication 14, dans laquelle l'acier résistant à l'acide sulfurique est formé avec au moins une couche concentrée choisie dans un groupe consistant en Cu, Co, Ni et Sb ayant une épaisseur de 100 à 300 nm immédiatement sous la surface.
